# EUROPEAN PATENT SPECIFICATION

(11) **EP 3 182 839 B1**
(45) Date of publication and mention of the grant of the patent: **04.03.2020**
(21) Application number: 15771265.4
(22) Date of filing: 24.08.2015
(51) Int. Cl.: A23P 30/25, A23L 13/00, A23L 13/60, A22C 13/00, A23L 29/256

(54) **CASING FOR FOOD PRODUCTS**
HÜLLE FÜR LEBENSMITTELPRODUKTE
BOYAU POUR PRODUITS ALIMENTAIRES

(30) Priority: 22.08.2014 ZA 201406178
(43) Date of publication of application: 28.06.2017
(73) Proprietor: Freddy Hirsch Group (PTY) Ltd., 8000 Cape Town (ZA)
(72) Inventor: DU PREEZ, Johannes Christiaan, 7570 Kraaifontein (ZA); VAN ZYL, Andries Wynand, 7800 Wynberg (ZA); SCHULTZ, Hermann August, 7441 Melkbosstrand (ZA)
(74) Representative: Somervell, Thomas Richard
(86) International application number: PCT/IB2015/056406
(87) International publication number: WO 2016/027261

(56) References cited:
- EP-A1- 2 510 813
- WO-A1-00/67582
- WO-A1-02/15715
- WO-A1-99/55165
- WO-A2-2006/135238
- FR-A1- 2 946 227
- US-A- 2 802 744
- US-A- 3 494 772
- US-A- 5 096 754
- US-A1- 2008 317 915
- US-A1- 2009 061 051
- US-A1- 2009 317 522
- US-A1- 2012 263 842

## Description

### BACKGROUND OF THE INVENTION

This invention relates to an alginate composition for coating food products, in particular meat products and a method for producing the alginate composition. Furthermore, the invention relates to a method for producing coated food products with the use of the alginate composition of the invention.

Casings for food products, in particular for meat products such as sausages, are well known in the food industry, ranging from natural casings which are generally made from the submucosa of the intestine of an animal comprised mainly of collagen to a variety of artificial or synthesised casings. Artificial casings may be comprised of processed collagen, alginate salts, cellulose, or even plastic. Many cellulose and plastic casings are not edible and are required to be peeled from the meat product after cooking, producing for example, "skinless" sausages. This is a wasteful exercise which is also not particularly environmentally friendly. Artificial casings comprising animal collagen may be edible, depending on the origin of the raw material, but carry the risk of prion disease such as bovine spongiform encephalopathy (BSE) or Creutzfeldt-Jakob disease as they are comprised from animal product. Furthermore, casings comprising collagen are not suitable for use in vegetarian products such as vegetarian sausages.

WO0215715 discloses a composition for coating foodstuffs which comprises a first polysaccharide that is negatively charged in the composition and gels under the influence of cations, as well as a method for coating foodstuffs.

EP2510813 discloses a water-based composition for coating foodstuffs consisting essentially of water as a major component, between about 2 and about 5 w/w % alginate, between about 1 and about 2.5 w/w % starch and between about 0.6 and about 1.3 w/w % carboxymethyl cellulose.

Artificial casing comprised of the salts of alginic acid have been under development since at least the 60s. However, mainstream use of alginate casings in the cooked meat industry, particularly the sausage or "hot dog" industry is still to be achieved, as the development of these casings is plagued with problems. In particular, problems experienced include a lack of adhesion of the casing to the sausage filling, resulting in the casing detaching from the meat product and an unappealing slimy texture to the sausage on touch after cooking.

An optimal artifical casing should preferably:
- be edible,
- be suitable for use with meat, vegetarian, Kosher and Halaal products,
- comprise a suitable viscosity to ensure that it is capable of efficient co-extrusion with the sausage filling or batter,
- be strong enough to ensure that the sausage filling or batter is held together during the cooking phase until the network sets to a solid matrix,
- serve as a barrier between the meat product and cooking fluid to avoid washing out of meat and therefore have low water permeability,
- interact closely with the meat product to provide good adhesion to surface of the meat product to prevent the casing from detaching from the meat product during cooking,
- be easy to tear or bite into, retaining the "bite factor" of traditional skinless meat products, and
- be inconspicuous so as to provide a direct replacement for traditional skinless meat products.

There is still a need for an artificial casing that meets all of the requirements set out above.

### SUMMARY OF THE INVENTION

The present invention is defined by the claims.

According to a first aspect of the invention there is provided an alginate composition for coating food products comprising the following ingredients as a mixture:
(i) between about 1.5 and about 7.5% (w/w) alginate salt;
(ii) between about 0.01% and about 2% (w/w) hydrocolloidal galactomannan vegetable gum selected from the group consisting of guar gum, tara gum and locust bean gum, or a combination thereof;
(iii) between about 8% and about 30% (w/w) polyol selected from the group consisting of glycerol, monopropyleneglycerol and sorbitol;
(iv) between about 1% and 6% (w/w) liquid smoke;
(v) a starch; and
(vi) a buffering agent selected from the group consisting of glucono delta-lactone (GDL), acetic acid, lactic acid, citric acid, sodium citrate and sodium carbonate,
wherein the alginate composition has a viscosity of between about 5 to 15 Pa.s, more preferably between about 7 to 8 Pa.s measured at 5°C.Optionally, the alginate composition may further comprise one or more types of plant fibre.

Preferably, the starch is tapioca starch.

Preferably, the aginate composition has a pH of between about 4.0 and about 4.5.

The buffering agent may be and acidifying agent such as glucono delta-lactone (GDL), acetic acid, lactic acid, citric acid or any any combination thereof. For example, the acidifying agent may be a combination of acetic acid 70% : 0.3% (w/w) / lactic acid 80% : 0.15 % (w/w). Alternatively for example, the acidifying agent may be citric acid.H₂O : 0.5 % (w/w). Further alternatively for example, the acidifying agent may be a combination of citric acid.H₂O : 0.5% (w/w) / Na3citrate.2H2O : 0.8 % (w/w) / lactic acid 80% : 0.2 % (w/w). Further alternatively for example, the acidifying agent may be acetic acid 70% : 0.3% (w/w). Further alternatively for example, the acidifying agent may be lactic acid 80% : 0.3% (w/w). Preferably, the acidifying agent is GDL.

Alternatively, the buffering agent may be a basic agent such as sodium carbonate or any other buffering agent suitable to raise the pH known to those skilled in the art. In particular, the basic agent may be sodium carbonate solution (80/20). Preferably, the sodium carbonate solution (80/20) may be about 0.5 % (w/w) of the final alginate composition.

For example, in one embodiment of the invention, the alginate composition for coating food products may comprise the following ingredients:
(i) between about 1.5% and about 7.5% (w/w) alginate salt;
(ii) optionally between about 0.5% and about 1.5% (w/w) plant fibre;
(iii) between about 0.01% and about 2% (w/w) hydrocolloidal galactomannan vegetable gum;
(iv) between about 8% and about 30% (w/w) polyol;
(v) between about 1% and 6% (w/w) liquid smoke;
(vi) starch; and
(vii) about 0.3% (w/w) acetic acid 70% / 0.15 % (w/w) lactic acid 80%.

For example, in another embodiment of the invention, the alginate composition for coating food products may comprise the following ingredients:
(i) between about 1.5% and about 7.5% (w/w) alginate salt;
(ii) optionally between about 0.5% and about 1.5% (w/w) plant fibre;
(iii) between about 0.01% and about 2% (w/w) hydrocolloidal galactomannan vegetable gum;
(iv) between about 8% and about 30% (w/w) polyol;
(v) between about 1% and 6% (w/w) liquid smoke;
(vi) starch; and
(vii) about 0.5% (w/w) sodium carbonate solution (80/20).

Preferably, the alginate salt is sodium alginate. More preferably, the sodium alginate comprises a ratio of 66 α-L-guluronate (G) : 34 (1-4)-linked β-D-mannuronate (M).

The optional plant fibre is preferably a citrus fibre. In particular, the citrus fibre may have a particle size of from about 10 to about 15µm. Alternative plant fibres known to those skilled in the art may be used including micro crystalline cellulose, carboxy methyl cellulose or low methoxyl pectin.

The hydrocolloidal galactomannan vegetable gum is preferably guar gum. However, alternative suitable vegetable gums may be tara gum or locust bean gum, or similar products known to those skilled in the art.

The polyol is preferably glycerol, monopropyleneglycol or sorbitol.

Preferably, the liquid smoke is a liquid smoke with a staining index of between about 50 to 200. Preferably the staining index is about 150. For example, the liquid smoke is substantially similar to the ZESTI-SMOKE™ liquid smoke Nature Sol Premium Plus.

In a preferred embodiment of the invention, the alginate composition comprises a mixture of the following ingredients:
(i) about 2.00 to about 3.00% (w/w) sodium alginate;
(ii) optionally about 1.00% (w/w) citrus fibre;
(iii) about 0.50% (w/w) guar gum;
(iv) about 20.00% (w/w) glycerol;
(v) about 1.50% (w/w) liquid smoke;
(vi) about 6.00% (w/w) tapioca starch; and
(vii) about 4.80% (w/w) GDL.

In an alternative preferred embodiment of the invention, the alginate composition comprises a mixture of the following ingredients:
(i) about 2.00 to about 3.00% (w/w) sodium alginate;
(ii) optionally about 1.00% (w/w) citrus fibre;
(iii) about 0.50% (w/w) guar gum;
(iv) about 20.00% (w/w) glycerol;
(v) about 1.50% (w/w) liquid smoke;
(vi) about 6.00% (w/w) tapioca starch; and
(vii) about 0.3% (w/w) acetic acid 70% / about 0.15 % (w/w) lactic acid 80%.

In a further alternative preferred embodiment of the invention, the alginate composition comprises a mixture of the following ingredients:
(i) about 2.00 to about 3.00% (w/w) sodium alginate;
(ii) optionally about 1.00% (w/w) citrus fibre;
(iii) about 0.50% (w/w) guar gum;
(iv) about 20.00% (w/w) glycerol;
(v) about 1.50% (w/w) liquid smoke;
(vi) about 6.00% (w/w) tapioca starch; and
(vii) about 0.5% (w/w) sodium carbonate solution (80/20)

The composition may further comprise water, colourants, flavourants, preservatives, antimicrobial agents and other suitable additives known to those skilled in the art. For example, the composition may further comprise about 63% water, about 1% maltodextrin and about 0.03% sodium benzoate.

According to a further embodiment of the invention there is provided a method for making the alginate composition of the invention comprising the following steps:
(i) blending each of the ingredients apart from the polyol into a water fraction by means of a high-shear mixer to form a paste;
(ii) blending the polyol into the paste; and
(iii) vacuum blending the paste to remove air.

In an alternative embodiment of the invention the method comprises the following steps:
(i) blending each of the ingredients apart from the liquid smoke and the polyol into the water fraction by means of a high-shear mixer to form a paste;
(ii) blending the liquid smoke into the paste;
(iii) blending the polyol into the paste; and
(iv) vacuum blending the paste to remove air.

According to a further alternative embodiment of the invention there is provided a method for making the alginate composition of the invention comprising the following steps:
(i) blending each of the ingredients apart from the polyol, liquid smoke and buffering agent into a water fraction by means of a high-shear mixer to form a paste;
(ii) blending the polyol, liquid smoke and buffering agent into the paste; and
(iii) vacuum blending the paste to remove air.

Optionally, the vacuum blending step may occur simultaneously with the high-shear blending.

According to a further embodiment of the invention there is provided a process for producing coated food products with the use of the alginate composition of the invention, the method comprising the following steps:
(i) co-extruding a food product to be coated and the alginate composition of the invention in a co-extruder apparatus to form an alginate composition coated food product;
(ii) introducing the coated food product into a setting solution comprising from about 5% to about 20% (w/w) calcium chloride to produce a gelled food product;
(iii) optionally cutting the gelled food product to the desired dimentions;
(iv) introducing the cut food product into a cooking liquid optionally comprising from about 0.1% to about 1.5% calcium chloride (w/w);
(v) cooking the coated food product in the cooking liquid at a temperature of from about 50 °C to about 95 °C;
(vi) drenching the coated food product in liquid smoke;
(vii) drying the coated food product at a temperature of from about 50°C to about 120°C at a relative humidity of from about 2% to about 60% for a period of from about 5 to 30 minutes; and
(viii) cooling the coated food product.

The setting solution preferably comprises about 15% calcium chloride.

Typically the coated food product is cooked for a period of from about 4 minutes to about 12 minutes depending of the diameter of the product. The product is ultimately cooled to a temperature of from about 2 °C to about 5 °C.

Typically the drenching step comprises discharging the food product into a vibratory feeder where recirculating liquid smoke is drenched over the product by means of several cascading drenchers.

Preferably, the product is dried at a temperature of about 90°C at a 3% relative humidity and for a period of 10 minutes. However, it is to be appreciated that the drying conditions are selected depending on the food product to be produced and desired hue of the food product.

The process may comprise, as one component of the process, use of the apparatus and method as set out in PCT patent number WO2010/113137.

Typically, the food product of the invention may be a meat or vegetarian food product. Preferably, the food product is a meat product such as a sausage. More preferably, the meat product is a cooked meat product such as a skinless sausage known to those skilled in the art.

A typical example of a skinless sausage product comprises the following:
(i) about 35% (w/w) mechanically deboned meat;
(ii) about 38% (w/w) pork trimmings;
(iii) about 18% (w/w) water;
(iv) about 5% starch;
(v) about 1.8% nitrite curing salt;
(vi) about 0.04% calcium lactate;
(vii) about 0.2% phosphate; and
(viii) about 1.96% flavourant.

According to a further embodiment of the invention is a food product coated with the alginate composition of the invention. In particular, the food product may be a cooked meat product such as a skinless sausage.

Typically, the coating on the food product is between about 75 - 250 microns in thickness. However, it is to be appreciated that the thickness may be selected to be greater or less than this.

According to a further aspect of the invention there is provided an alginate composition substantially as herein described with reference to any one of the illustrative examples.

According to a further aspect of the invention there is provided a method of making an alginate composition substantially as herein described with reference to any one of the illustrative examples.

According to a further aspect of the invention there is provided a process of making an food product coated with an alginate composition substantially as herein described with reference to any one of the illustrative examples.

It is to be appreciated that a person skilled in the art may supply a dry mix composition comprising:
(i) about 2.00% (w/w) sodium alginate;
(ii) about 0.50% (w/w) guar gum; and
(iii) about 6.00% (w/w) tapioca starch
for use in the manufacture of the alginate composition of the invention.

Alternatively it is to be appreciated that a person skilled in the art may supply a dry mix composition comprising:
(iv) about 20.00% (w/w) glycerol;
(v) about 1.50% (w/w) liquid smoke; and
(vi) about 4.80% (w/w) GDL, about 0.3% (w/w) acetic acid 70% / 0.15 % (w/w) lactic acid 80%, or about 0.5% (w/w) sodium carbonate solution
for use in the manufacture of the alginate composition of the invention.

### DETAILED DESCRIPTION OF THE INVENTION

Reference to "about" a value or parameter herein includes (and describes) variations that are directed to that value or parameter per se. For example, description referring to "about X" includes description of "X".

As used herein and in the appended claims, the singular forms "a," "or," and "the" include plural referents unless the context clearly dictates otherwise. It is understood that aspects and variations of the invention described herein include "consisting" and/or "consisting essentially of' aspects and variations.

It is understood that aspect and variations of the invention described herein include "consisting" and/or "consisting essentially of' aspects and variations.

This invention relates to an alginate composition for coating food products, in particular cooked meat products such as sausages (for example "hot dog" or "vienna" sausages and a method for producing the alginate composition. Furthermore, the invention relates to a method for producing coated food products with the use of the alginate composition of the invention.

Alginates are well known in the food industry. They are anionic polysaccharides composed of two monomers that are covalently bonded as homopolymeric blocks of (1-4)-linked β-D-mannuronate (designated M) and its C-5 epimer α-L-guluronate (designated G) residues. The blocks may occur as three combinations within the alginate polymer chains; GGGG, MMMM and GMGM. Alginates are used as gelling agents in the food industry as they will form crosslinks when contacted with multivalent metal ions. Typically, in the food industry calcium is the predominant choice, although barium, aluminium, strontium, magnesium and the like would also work. In particular, the crosslinking occurs in the GGGG regions of the alginate polymer. Accordingly, the preferred alginate for use in the invention comprises a ratio of 66 α-L-guluronate : 34 β-D-mannuronate. In some embodiments, the preferred alginate for use in the invention comprises a ratio of about 66 α-L-guluronate : about 34 β-D-mannuronate. Furthermore, the applicant has identified that between about 1.5% to 7.5% (w/w), more preferably about 2% to 3% (w/w), further more preferably about 2% (w/w) of sodium alginate is optimal for use in the alginate composition of the invention.

A variety of plant fibres are well known in the food industry including, but not limited to, citrus fibre, micro crystalline cellulose, carboxy methyl cellulose (CMC) and low methoxyl pectin. Citrus fiber has the advantage of being shown to have high water holding capacity and apparent viscosity. The applicant has determined that in particular, a citrus fibre with a particle size of from about 10 to about 15µm is optimal for use in the alginate composition if desired. Moreover, the applicant has shown that between about 0.5%-1.5%, more preferably 1% (w/w) of citrus fibre is optimal for use in the invention if desired. However, any suitable plant fibre with similar qualities to citrus fibre known to those skilled in the art may also be used.

A number of hydrocolloidal galactomannan vegetable gums are also known to those in the industry. For example, guar gum, locust bean gum and tara gum are all used as thickening agents and stabilizers in food applications. Tara gum is less viscous than guar gum in a solution of the same concentration, but is more viscous than a solution of locust bean gum. Guar gum is the preferred galactomannan for use in the invention. It is more soluble than locust bean gum and is a better stabilizer. It is not self-gelling, but can also be cross-linked with calcium, causing it to gel. The applicant has found that between about 0.01% - 2%, more preferably about 0.5% (w/w) of guar gum is optimal for use in the alginate composition of the invention. However, it is to be appreciated that instead of, or in combination with guar gum, locus bean gum or tara gum may also be used by a person skilled in the art.

Surprisingly, the applicant found that the percentage volume of polyol (in particular glycerol, monopropyleneglycol or sorbitol) of between 8% to about 30%, and preferably about 20% (w/w) was optimal for producing the alginate composition.

Furthermore, rather than the traditional method of application of liquid smoke only to the exterior of the meat product once the casing has been allowed to gel, the applicant included between about 1% and 6%, more preferably 2% to 4 % (w/w) liquid smoke into the alginate composition. The applicant has surprisingly found that this addition surprisingly improved adhesion of the alginate casing composition to the meat proteins. This may be due to carbonyls in the liquid smoke cross-linking with the meat proteins. Accordingly, although any liquid smoke product known to those skilled in the art may be used, those with higher carbonyl content (as reflected in the staining index) are preferred. For example, the applicant found that use of the ZESTI-SMOKE™ liquid smoke Nature Sol Premium Plus brand was optimal. The characteristics of this liquid smoke is as set out in Table 2 below.

**Table 2: Zesti Nature Sol Premium Plus liquid smoke characteristics**

| **Acidity (%)** | **Staining Index** | **Phenols** | **Density @ 25 °C** | **pH** |
|---|---|---|---|---|
| 9.62 | 150 | 4.64 | 1.08 - 1.18 | 2 - 3 |

Tapioca is a starch extracted from the cassava root which is widely used in the food industry. The applicant found that the addition of tapioca starch was useful as an agent to enhance viscosity and alginate network interruption in the alginate composition. However, similar starches that may be used include potato modified staches such as ColFlo 67 or corn starch.

Various buffering agents are known to those skilled in the food industry. For example, acidifying agents for decreasing the pH of the alginate composition to between 4.0 and 4.5 may include acetic acid, lactic acid, citric acid, glucono delta-lactone (GDL) or any any combination thereof may be used. For example, the acidifying agent may be a combination of acetic acid 70% : 0.3% (w/w) / lactic acid 80% : 0.15 % (w/w). Alternatively for example, the acidifying agent may be citric acid.H2O : 0.5 % (w/w). Further alternatively for example, the acidifying agent may be a combination of citric acid.H2O : 0.5% (w/w) / Na3citrate.2H2O : 0.8 % (w/w) / lactic acid 80% : 0.2 % (w/w). Further alternatively for example, the acidifying agent may be acetic acid 70% : 0.3% (w/w). Further alternatively for example, the acidifying agent may be lactic acid 80% : 0.3% (w/w). In one specific embodiment of the invention, GDL was used as the acidifying agent in the alginate composition. In another specific embodiment of the invention (vii) acetic acid 70% : 0.3% (w/w) / lactic acid 80% : 0.15 % (w/w) was used as the acidifying agent. Alternatively, basic agents for increasing the pH of the composition to between 4.0 and 4.5 include sodium carbonate solution, for example an 80/20 solution of sodium carbonate.

The viscosity of the alginate composition is important for effective co-extrusion with the meat product batter. The applicant has found that a viscosity of between about 5 to 15 Pa.s measured at 5 °C, and even more preferably between about 7 to 8 Pa.s is optimal. Viscosity was measured by means of a Brooksfield R/S plus Rheometer with the following settings:

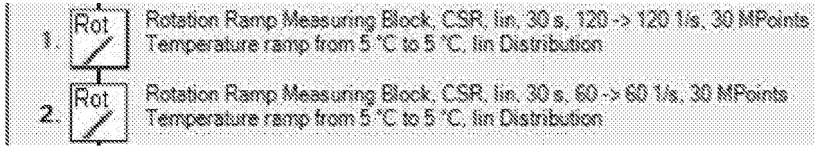

Three samples from one production batch were run separately through the Rheometer and the average of the runs at 120 shear were used as the viscosity for the batch.

Preferably, the aginate composition has a pH of between about 4.0 and about 4.5. The applicant has found that a low pH of the alginate casing composition is important for reducing the repulsive forces between the alginate composition casing and the meat batter due to the negative charge reduction of the alginate chains by protonation of the carboxyl groups allowing for better interaction between the meat product and the alginate composition.

The composition may further comprise water, colourants, flavourants, preservatives, antimicrobial agents and other suitable additives known to those skilled in the art. For example, the composition may further comprise or further consist of about 63% water, about 1% maltodextrin and about 0.03% sodium benzoate.

A further aspect of the invention is the method for making the alginate composition. The applicant has determined that the alginate composition can be simply produced by blending each of the ingredients apart from the glycerol into water by means of a high-shear mixer to form a paste, followed by blending the glycerol into the paste. The paste is then vacuum blended to remove air by means of a standard vacuum blender known to those skilled in the art.

Typical high-shear mixers that may be used are well known to those skilled in the art and may include an Inxopa High Shear Mixer ME4105, a Cowles sawtooth blade mixer, a Silverson inline high shear mixer or a Bowl Chopper mixer.

For example, the vacuum blender may be a Ruhle vacuum tumbler, a Promarks vacuum tumbler, a ribbon vacuum blender, or a Cozzini vacuum blender.

An alternative method of making the alginate composition has also been developed by the applicant comprising blending all of the ingredients apart from the liquid smoke and the glycerol in water by means of a high-shear mixer to form a paste. The liquid smoke is then blended into the paste followed by the glycerol. Finally, the paste is vacuum blended to remove air. Alternatively, the liquid smoke and glycerol may be combined with sodium carbonate buffering agent and then added to the rest of the ingredients by means of a high-shear mixer to form a paste.

It is also possible to perform the mixing steps by means of a unit comprising a high shear mixer while under vacuum. For example, this may be a vacuum bowlchopper, or a Glass AGM mixer, or another such unit known to those skilled in the art.

The food product for use with the invention could be a meat or vegetarian food product. However, preferably, the food product is a meat product such as a sausage. More preferably, the meat product is a cooked meat product such as a skinless sausage known to those skilled in the art.

A typical example of a skinless sausage product comprises the following:
(i) about 35% (w/w) mechanically deboned meat;
(ii) about 38% (w/w) pork trimmings;
(iii) about 18% (w/w) water;
(iv) about 5 % starch;
(v) about 1.8% nitrite curing salt;
(vi) about 0.04% calcium lactate;
(vii) about 0.2% phosphate; and
(viii) about 1.96% flavourant.

An additional aspect of the invention pertains to a process for producing coated food products with the use of the alginate composition. The method first comprises a standard method of co-extrusion of a food product to be coated with the alginate composition of the invention in a co-extruder apparatus to form an alginate composition coated food product. The coated food product is then immersed in a setting solution comprising calcium chloride. The applicant has found that the optimal concentration of calcium chloride required for use in the setting solution is from about 5% to about 20% (w/w) calcium chloride to product a gelled coated food product. Most preferably, the calcium chloride concentration is about 15% (w/w). The gelled coated food product is then introduced into a cooking liquid. The cooking liquid may comprise from about 0.1 % to 1.5 % calcium chloride, but for meat product of a high calcium content it is possible to cook the product without addition of calcium chloride to the cooking liquid. The coated food product is cooked at a temperature of from about 50 °C to about 95 °C to a core temperature of typically about 72 °C.

Whilst typical artificially-coated meat products comprising alginate have been known to be processed with a step of drenching the product in a liquid smoke, the liquid smoke is only added to the coated product after cooking. Surprisingly, the applicant has found that addition of liquid smoke within the alginate composition leads to enhanced adhesion of the alginate casing composition to the meat product that is encased. Further addition of liquid smoke by external drenching was then found to enhance the adhesion of the alginate casing to the meat even further. It is postulated that this may be through interaction of the additional carbonyls from the externally applied liquid smoke with the meat product, leading to enhanced adhesion of the casing to the enclosed meat product.

The next step of the process is to dry the coated food product at a temperature of from about 50°C to about 120°C at a relative humidity of from about 2% to about 60% for a period of from about 5 to 30 minutes. The applicant has, however found that the optimal drying temperature for standard "hot dog" sausages is about 90°C at a 3% relative humidity and for a period of 10 minutes. However, it is to be understood that should a lighter colour product be desired, the temperature would be decreased and humidity increased, whereas for a darker colour product the opposite would be required. The final step of the process is to cool the product to a temperature of between 2 and 5 °C.

By utilising the alginate composition of the invention in this process a food product, in particular a cooked meat sausage is produced that has excellent adhesion between the casing and the meat enclosed which does not peel or separate when the sausage is broken and does not detach when the sausage is cooked or warmed by the consumer. The product is near indistinguishable from a traditional skinless cooked sausage product and has a similar feel and "bite" effect. Typically the casing is between about 75 - 250 microns in thickness, although this may be selected depending on the calibre of the meat product to be produced and may be thicker or thinner.

Preferably, the process comprises as one component of the process, the use of the apparatus and method as set out in PCT patent number WO2010/113137.

The invention will be described by way of the following examples which are not to be construed as limiting in any way the scope of the invention.

### EXAMPLE 1:

The alginate casing compostion is prepared by blending in a high-shear mixer (all ingredients are provided as w/w):

| | |
|---|---|
| 2.00% | Sodium Alginate |
| 0.50% | Guar gum |
| 64.20% | Water |
| 6.00% | Tapioca Starch |
| 4.80% | GDL |
| 1.00% | Maltodextrin |
| 0.03% | Sodium Benzoate |

Use of a 4800 rpm bowlchopper with 6 blades hydrates the ingrendients in about 8 minutes.

1.50% Liquid Smoke is added and blended with a 4800 rpm bowlchopper with 6 blades for about 9 minutes.

20.00% Glycerol is then added and blended into the paste and blended with a 4800 rpm bowlchopper with 6 blades for about 12 minutes.

The paste is then vacuum blended to remove air by means of a vacuum blender such as the Ruhle vacuum tumbler MKR 220 or a Cozzini vacuum blender.

### EXAMPLE 2:

The alginate casing compostion is prepared by blending in a high-shear mixer (all ingredients are provided as w/w):

| | |
|---|---|
| 2.00% | Sodium Alginate |
| 0.50% | Guar gum |
| 64.20% | Water |
| 1.50% | Liquid Smoke |
| 6.00% | Tapioca Starch |
| 4.80% | GDL |
| 1.00% | Maltodextrin |
| 0.03% | Sodium Benzoate |

Use of a 4800 rpm bowlchopper with 6 blades hydrates the ingrendients in about 8 minutes.

20.00% Glycerol is then blended into the paste and blended with a 4800 rpm bowlchopper with 6 blades for about 12 minutes.

The paste is then vacuum blended to remove air by means of a vacuum blender such as the Ruhle vacuum tumbler MKR 220 or a Cozzini vacuum blender.

### EXAMPLE 3:

The alginate casing compostion is prepared by blending in a high-shear mixer (all ingredients are provided as w/w):

| | |
|---|---|
| 2.00% | Sodium Alginate |
| 0.50% | Guar gum |
| 68.52% | Water |
| 6.00% | Tapioca Starch |
| 0.3% | acetic acid 70% |
| 0.15 % | lactic acid 80% |
| 1.00% | Maltodextrin |
| 0.03% | Sodium Benzoate |

Use of a 4800 rpm bowlchopper with 6 blades hydrates the ingrendients in about 8 minutes.

1.50% Liquid Smoke is added and blended with a 4800 rpm bowlchopper with 6 blades for about 9 minutes.

20.00% Glycerol is then added and blended into the paste and blended with a 4800 rpm bowlchopper with 6 blades for about 12 minutes.

The paste is then vacuum blended to remove air by means of a vacuum blender such as the Ruhle vacuum tumbler MKR 220 or a Cozzini vacuum blender.

### EXAMPLE 4:

The alginate casing compostion is prepared by blending in a high-shear mixer (all ingredients are provided as w/w):

| | |
|---|---|
| 2.00% | Sodium Alginate |
| 0.50% | Guar gum |
| 68.52% | Water |
| 1.50% | Liquid Smoke |
| 6.00% | Tapioca Starch |
| 0.3% | acetic acid 70% |
| 0.15 % | lactic acid 80% |
| 1.00% | Maltodextrin |
| 0.03% | Sodium Benzoate |

Use of a 4800 rpm bowlchopper with 6 blades hydrates the ingrendients apart from the glycerol in about 8 minutes.

20.00% Glycerol is then blended into the paste and blended with a 4800 rpm bowlchopper with 6 blades for about 12 minutes.

The paste is then vacuum blended to remove air by means of a vacuum blender such as the Ruhle vacuum tumbler MKR 220 or a Cozzini vacuum blender.

### EXAMPLE 5:

The alginate casing compostion is prepared in accordance with any of the previous Examples 1 to 4, however an additional 1.00% (w/w) Citrus Fiber is added and the amount of water is decreased by 1 % (w/w).

### EXAMPLE 6:

The alginate casing compostion is prepared in accordance with any of the previous Examples 1 to 5, but use of a 4800 rpm bowlchopper with 6 blades hydrates the ingrendients apart from the Glycerol and Liquid Smoke in about 8 minutes. A mixture of 1.5% Liquid Smoke and 20.00% Glycerol is then blended into the paste and blended with a 4800 rpm bowlchopper with 6 blades for about 12 minutes. The paste is then vacuum blended to remove air by means of a vacuum blender such as the Ruhle vacuum tumbler MKR 220 or a Cozzini vacuum blender.

### EXAMPLE 7:

The alginate casing compostion is prepared in accordance with any of the previous Examples 1 to 5, but instead of the GDL, acetic acid or lactic acid acidifying agents being used, 0.5% (w/w) of sodium carbonate solution (80/20) is added. Use of a 4800 rpm bowlchopper with 6 blades hydrates the ingrendients apart from the Glycerol, Liquid Smoke and sodium carbonate solution (80/20) in about 8 minutes. A mixture of 1.5% Liquid Smoke, 20.00% Glycerol and 0.5% sodium carbonate solution (80/20) is then blended into the paste and blended with a 4800 rpm bowlchopper with 6 blades for about 12 minutes. The paste is then vacuum blended to remove air by means of a vacuum blender such as the Ruhle vacuum tumbler MKR 220 or a Cozzini vacuum blender.

### EXAMPLE 8:

Sausage meat paste is prepared comprising:
(i) 35% (w/w) mechanically deboned meat;
(ii) 38% (w/w) pork trimmings;
(iii) 18% (w/w) water;
(iv) 5% (w/w) starch;
(v) 1.8% (w/w) nitrite curing salt;
(vi) 0.04% (w/w) calcium lactate;
(vii) 0.2% (w/w) phosphate; and
(viii) 1.96% (w/w) flavourant.

The sausages are then co-extruded with the prepared alginate casing composition by means of the Handtmann ConPro co-extrusion system (Handtmann, Germany) to form an alginate composition coated sausage. The coated sausage is then briefly immersed in a setting solution comprising 15% (w/w) calcium chloride for 1 second to gel the alginate casing and the coated sausages are then cut into portions. After this the product is fed into the cooking water comprising from about 0.1% to 1.5% calcium chloride and the coated food product is cooked to a core temperature of about 72 °C. The coated sausages are then drenched in liquid smoke by discharging coated product into a vibratory feeder where recirculating liquid smoke is drenched over the product with several cascading drenchers. Finally, the coated sausages are dried in a Hirschpro Dryer at a temperature of 90°C at a 3% relative humidity and for a period of 10 minutes. The food product is then cooled to from about 2 to about 5 °C.

## Claims

1. An alginate composition for coating food products comprising the following mixture of ingredients:
(i) between about 1.5% and about 7.5% (w/w) alginate salt;
(ii) between about 0.01% and about 2% (w/w) hydrocolloidal galactomannan vegetable gum selected from the group consisting of guar gum, tara gum and locust bean gum, or a combination thereof;
(iii) between about 8% and about 30% (w/w) polyol selected from the group consisting of glycerol, monopropyleneglycol and sorbitol;
(iv) between about 1% and 6% (w/w) liquid smoke;
(v) starch; and
(vi) a buffering agent selected from the group consisting of glucono delta-lactone (GDL), acetic acid, lactic acid, citric acid, sodium citrate and sodium carbonate,
wherein the alginate composition has a viscosity of between 5 to 15 Pa.s measured at 5°C, preferably wherein the alginate composition has a viscosity of between 7 to 8 Pa.s measured at 5°C.

2. The alginate composition according to claim 1, having a pH of between 4.0 and 4.5.

3. The alginate composition according to claim 1, wherein the alginate salt is sodium alginate.

4. The alginate composition according to claim 1, wherein the alginate salt comprises a ratio of 66 α-L-guluronate (G) : 34 (1-4)-linked β-D-mannuronate (M).

5. The alginate composition according to claim 1, wherein the polyol is glycerol.

6. The alginate composition according to claim 1, wherein the liquid smoke has a staining index of between 50 to 200, preferably 150.

7. The alginate composition according to claim 1, comprising as an admixture:
(i) 2.00% (w/w) sodium alginate;
(ii) 0.50% (w/w) guar gum;
(iii) 20.00% (w/w) glycerol;
(iv) 1.50% (w/w) liquid smoke;
(v) 6.00% (w/w) tapioca starch; and
(vi) 4.80% (w/w) GDL, 0.3% (w/w) acetic acid 70% / 0.15 % (w/w) lactic acid 80%, 0.5 % (w/w) citric acid.H2O, 0.5% (w/w) citric acid.H2O / 0.8 % (w/w) Na3citrate.2H2O / 0.2 % (w/w) lactic acid 80%, 0.3% (w/w) acetic acid 70%, 0.3% (w/w) lactic acid 80%, or 0.5% (w/w) sodium carbonate solution.

8. A method for making the alginate composition of claim 1, the method comprising the following steps:
(i) blending each of the ingredients apart from the polyol into a water fraction by means of a high-shear mixer to form a paste;
(ii) blending the polyol into the paste; and
(iii) vacuum blending the paste to remove air.

9. A method for making the alginate composition of claim 1, the method comprising the following steps:
(i) blending each of the ingredients apart from the polyol, liquid smoke and buffering agent into a water fraction by means of a high-shear mixer to form a paste;
(ii) blending the polyol, liquid smoke and buffering agent into the paste; and
(iii) vacuum blending the paste to remove air.

10. The method for making the alginate composition of claim 1, the method comprising the following steps:
(i) blending each of the ingredients apart from the liquid smoke and the polyol into the water fraction by means of a high-shear mixer to form a paste;
(ii) blending the liquid smoke into the paste;
(iii) blending the polyol into the paste; and
(iv) vacuum blending the paste to remove air.

11. A process for producing coated food products comprising the alginate composition of claim 1, the process comprising the following steps:
(i) co-extruding a food product to be coated and the alginate composition in a co-extruder apparatus to form an alginate composition coated food product;
(ii) introducing the coated food product into a setting solution comprising from 5% to 20.0% (w/w), preferably 15%, calcium chloride to produce a gelled food product;
(iii) introducing the gelled food product into a cooking liquid optionally comprising from 0.1% to 1.5% calcium chloride (w/w);
(iv) cooking the gelled food product in the cooking liquid at a temperature of from 50 °C to 95 °C;
(v) drenching the cooked food product in liquid smoke;
(vi) drying the drenched food product at a temperature of from 50°C to 120°C at a relative humidity of from 2% to 60% for a period of from 5 to 30 minutes; and
(vii) cooling the cooked food product.

12. The process according to claim 11, wherein the product is dried at a temperature of 90°C at a 3% relative humidity and for a period of 10 minutes.

13. A food product coated with the alginate composition according to claim 1, preferably wherein the food product is a meat sausage.

## Patentansprüche

1. Alginatzusammensetzung zum Beschichten von Nahrungsmittelprodukten, umfassend die folgende Mischung von Bestandteilen:
(i) zwischen etwa 1,5 % und etwa 7,5 % (Gew./Gew.) Alginatsalz;
(ii) zwischen etwa 0,01 % und etwa 2 % (Gew./Gew.) hydrokolloidalem Galactomannan-Pflanzengummi ausgewählt aus der Gruppe bestehend aus Guargummi, Taragummi und Johannisbrotgummi oder eine Kombination davon;
(iii) zwischen etwa 8 % und etwa 30 % (Gew./Gew.) Polyol ausgewählt aus der Gruppe bestehend aus Glycerin, Monopropylenglycol und Sorbit;
(iv) zwischen etwa 1 % und 6 % (Gew./Gew.) Flüssigrauch;
(v) Stärke; und
(vi) ein Puffermittel ausgewählt aus der Gruppe bestehend aus Glucon-deltalacton (GDL), Essigsäure, Milchsäure, Zitronensäure, Natriumcitrat und Natriumcarbonat,
wobei die Alginatzusammensetzung eine Viskosität zwischen 5 und 15 Pa•s, bei 5 °C gemessen, aufweist, wobei die Alginatzusammensetzung bevorzugt eine Viskosität zwischen 7 und 8 Pa•s, bei 5 °C gemessen, aufweist.

2. Alginatzusammensetzung nach Anspruch 1, die einen pH-Wert zwischen 4,0 und 4,5 aufweist.

3. Alginatzusammensetzung nach Anspruch 1, wobei das Alginatsalz Natriumalginat ist.

4. Alginatzusammensetzung nach Anspruch 1, wobei das Alginatsalz ein Verhältnis von 66 α-L-Guluronat (G) : 34 (1-4)-verknüpftes β-D-Mannuronat (M) umfasst.

5. Alginatzusammensetzung nach Anspruch 1, wobei das Polyol Glycerin ist.

6. Alginatzusammensetzung nach Anspruch 1, wobei der flüssige Rauch einen Färbungsindex zwischen 50 und 200, bevorzugt von 150, aufweist.

7. Alginatzusammensetzung nach Anspruch 1, umfassend als Zusatzmittel:
(i) 2,00 % (Gew./Gew.) Natriumalginat;
(ii) 0,50 % (Gew./Gew.) Guargummi;
(iii) 20,00 % (Gew./Gew.) Glycerin;
(iv) 1,50 % (Gew./Gew.) flüssigen Rauch;
(v) 6,00 % (Gew./Gew.) Cassavastärke; und
(vi) 4,80 % (Gew./Gew.) GDL, 0,3 % (Gew./Gew.) Essigsäure 70 %/0,15 % (Gew./Gew.) Milchsäure 80 %, 0,5 % (Gew./Gew.) Zitronensäure•H₂O, 0,5 % (Gew./Gew.) Zitronensäure•H₂O/0,8 % (Gew./Gew.) Na3citrat•2H₂O/0,2 % (Gew./Gew.) Milchsäure 80 %, 0,3 % (Gew./Gew.) Essigsäure 70 %, 0,3 % (Gew./Gew.) Milchsäure 80 % oder 0,5 % (Gew./Gew.) Natriumcarbonatlösung.

8. Verfahren zum Herstellen der Alginatzusammensetzung nach Anspruch 1, wobei das Verfahren die folgenden Schritte umfasst:
(i) Mischen jedes der Bestandteile, von Polyol abgesehen, in eine Wasserfraktion mittels einer Hochschermischvorrichtung, um eine Paste zu bilden;
(ii) Mischen des Polyols in die Paste; und
(iii) Vakuummischen der Paste, um Luft zu entfernen.

9. Verfahren zum Herstellen der Alginatzusammensetzung nach Anspruch 1, wobei das Verfahren die folgenden Schritte umfasst:
(i) Mischen jedes der Bestandteile, von Polyol, flüssigem Rauch und Puffermittel abgesehen, in eine Wasserfraktion mittels einer Hochschermischvorrichtung, um eine Paste zu bilden;
(ii) Mischen des Polyols, flüssigen Rauchs und Puffermittels in die Paste; und
(iii) Vakuummischen der Paste, um Luft zu entfernen.

10. Verfahren zum Herstellen der Alginatzusammensetzung nach Anspruch 1, wobei das Verfahren die folgenden Schritte umfasst:
(i) Mischen jedes der Bestandteile, von flüssigem Rauch und Polyol abgesehen, in die Wasserfraktion mittels einer Hochschermischvorrichtung, um eine Paste zu bilden;
(ii) Mischen des flüssigen Rauchs in die Paste;
(iii) Mischen des Polyols in die Paste; und
(iv) Vakuummischen der Paste, um Luft zu entfernen.

11. Verfahren zum Herstellen beschichteter Nahrungsmittelprodukte umfassend die Alginatzusammensetzung nach Anspruch 1, wobei das Verfahren die folgenden Schritte umfasst:
(i) Coextrudieren eines zu beschichtenden Nahrungsmittelprodukts und der Alginatzusammensetzung in einer Coextrudervorrichtung, um ein mit Alginatzusammensetzung beschichtetes Nahrungsmittelprodukt zu bilden;
(ii) Einführen des beschichteten Nahrungsmittelprodukts in eine erstarrende Lösung umfassend 5 % bis 20,0 % (Gew./Gew.), bevorzugt 15 %, Calciumchlorid, um ein geliertes Nahrungsmittelprodukt herzustellen;
(iii) Einführen des gelierten Nahrungsmittelprodukts in eine Kochflüssigkeit, die wahlweise 0,1 % bis 1,5 % Calciumchlorid (Gew./Gew.) umfasst;
(iv) Kochen des gelierten Nahrungsmittelprodukts in der Kochflüssigkeit bei einer Temperatur von 50 °C bis 95 °C;
(v) Durchnässen des gekochten Nahrungsmittelprodukts mit flüssigem Rauch;
(vi) Trocknen des durchnässten Nahrungsmittelprodukts bei einer Temperatur von 50 °C bis 120 °C bei einer relativen Feuchte von 2 % bis 60 % für eine Zeitspanne von 5 bis 30 Minuten; und
(vii) Kühlen des gekochten Nahrungsmittelprodukts.

12. Verfahren nach Anspruch 11, wobei das Produkt bei einer Temperatur von 90 °C bei einer relativen Feuchte von 3 % und für eine Zeitspanne von 10 Minuten getrocknet wird.

13. Nahrungsmittelprodukt, das mit der Alginatzusammensetzung nach Anspruch 1 beschichtet ist, wobei bevorzugt das Nahrungsmittelprodukt eine Fleischwurst ist.

## Revendications

1. Composition d'alginate pour l'enrobage de produits alimentaires comprenant le mélange suivant d'ingrédients:
(i) entre environ 1,5 % et environ 7,5 % (en pds/pds) de sel alginate;
(ii) entre environ 0,01 % et environ 2 % (en pds/pds) de gomme végétale hydrocolloïdale de galactomannane sélectionnée dans le groupe constitué de la gomme de guar, de la gomme de tara et de la gomme de caroube, ou une combinaison de celles-ci;
(iii) entre environ 8 % et environ 30 % (en pds/pds) de polyol sélectionné dans le groupe constitué du glycérol, du monopropylène glycol et du sorbitol;
(iv) entre environ 1 % et 6 % (en pds/pds) de fumée liquide;
(v) de l'amidon; et
(vi) un agent tampon sélectionné dans le groupe constitué de la glucono delta-lactone (GDL), de l'acide acétique, de l'acide lactique, de l'acide citrique, du citrate de sodium et du carbonate de sodium,
la composition d'alginate ayant une viscosité comprise entre 5 et 15 Pa•s mesurée à 5°C, préférablement la composition d'alginate ayant une viscosité comprise entre 7 et 8 Pa•s mesurée à 5°C.

2. Composition d'alginate selon la revendication 1, ayant un pH compris entre 4,0 et 4,5.

3. Composition d'alginate selon la revendication 1, le sel alginate étant de l'alginate de sodium.

4. Composition d'alginate selon la revendication 1, dans laquelle le sel alginate comprend un rapport de 66 α-L-guluronate (G):34 β-D-mannuronate lié en (1-4) (M).

5. Composition d'alginate selon la revendication 1, le polyol étant du glycérol.

6. Composition d'alginate selon la revendication 1, la fumée liquide ayant un indice de coloration compris entre 50 et 200, préférablement de 150.

7. Composition d'alginate selon la revendication 1, comprenant comme mélange par admixtion:
(i) 2,00 % (en pds/pds) d'alginate de sodium;
(ii) 0,50 % (en pds/pds) de gomme de guar;
(iii) 20,00 % (en pds/pds) de glycérol;
(iv) 1,50 % (en pds/pds) de fumée liquide;
(v) 6,00 % (en pds/pds) d'amidon de tapioca; et
(vi) 4,80 % (en pds/pds) de GDL, 0,3 % (en pds/pds) d'acide acétique à 70 %/0,15 % (en pds/pds) d'acide lactique à 80 %, 0,5 % (en pds/pds) d'acide citrique•H₂O, 0,5 % (en pds/pds) d'acide citrique•H₂O/0,8 % (en pds/pds) de Na₃citrate•2H₂O/0,2 % (en pds/pds) d'acide lactique à 80 %, 0,3 % (en pds/pds) d'acide acétique à 70 %, 0,3 % (en pds/pds) d'acide lactique à 80 %, ou 0,5 % (en pds/pds) de solution de carbonate de sodium.

8. Procédé de fabrication de la composition d'alginate selon la revendication 1, le procédé comprenant les étapes suivantes:
(i) mélange de chacun des ingrédients à l'exception du polyol dans une fraction aqueuse à l'aide d'un mélangeur à cisaillement élevé pour former une pâte;
(ii) mélange du polyol dans la pâte; et
(iii) mélange sous vide de la pâte pour retirer l'air.

9. Procédé de fabrication de la composition d'alginate selon la revendication 1, le procédé comprenant les étapes suivantes:
(i) mélange de chacun des ingrédients à l'exception du polyol, de la fumée liquide et de l'agent tampon dans une fraction aqueuse à l'aide d'un mélangeur à cisaillement élevé pour former une pâte;
(ii) mélange du polyol, de la fumée liquide et de l'agent tampon dans la pâte; et
(iii) mélange sous vide de la pâte pour retirer l'air.

10. Procédé de fabrication de la composition d'alginate selon la revendication 1, le procédé comprenant les étapes suivantes:
(i) mélange de chacun des ingrédients à l'exception de la fumée liquide et du polyol dans la fraction aqueuse à l'aide d'un mélangeur à cisaillement élevé pour former une pâte;
(ii) mélange de la fumée liquide dans la pâte;
(iii) mélange du polyol dans la pâte; et
(iv) mélange sous vide de la pâte pour retirer l'air.

11. Procédé de production de produits alimentaires enrobés comprenant la composition d'alginate selon la revendication 1, le procédé comprenant les étapes suivantes:
(i) co-extrusion d'un produit alimentaire à enrober et de la composition d'alginate dans un appareil à co-extrusion pour former un produit alimentaire enrobé de la composition d'alginate;
(ii) introduction du produit alimentaire enrobé dans une solution de prise comprenant de 5 % à 20,0 % (en pds/pds), préférablement 15 %, de chlorure de calcium pour produire un produit alimentaire gélifié;
(iii) introduction du produit alimentaire gélifié dans un liquide de cuisson comprenant optionnellement de 0,1 % à 1,5 % de chlorure de calcium (en pds/pds);
(iv) cuisson du produit alimentaire gélifié dans le liquide de cuisson à une température de 50°C à 95°C;
(v) trempage du produit alimentaire cuit dans la fumée liquide;
(vi) séchage du produit alimentaire trempé à une température de 50°C à 120°C à une humidité relative de 2 % à 60 % sur une durée de 5 à 30 minutes; et
(vii) refroidissement du produit alimentaire cuit.

12. Procédé selon la revendication 11, dans lequel le produit est séché à une température de 90°C à une humidité relative de 3 % et sur une durée de 10 minutes.

13. Produit alimentaire enrobé de la composition d'alginate selon la revendication 1, préférablement le produit alimentaire étant une saucisse de viande.
